(19) **Europäisches Patentamt / European Patent Office / Office européen des brevets**

(11) **EP 2 302 260 B1**

(12) **EUROPEAN PATENT SPECIFICATION**

(45) Date of publication and mention
of the grant of the patent:
**28.11.2012 Bulletin 2012/48**

(51) Int Cl.:
***F01L 1/02*** (2006.01)  ***F01L 1/356*** (2006.01)

(21) Application number: **10188147.2**

(22) Date of filing: **12.05.2005**

(54) **Traction mechanism for an internal combustion engine**

Zugmitteltrieb für eine Brennkraftmaschine

Mécanisme de traction pour moteur à combustion

(84) Designated Contracting States:
**AT DE FR HU IT**

(30) Priority: **03.06.2004 DE 102004027064**
**29.07.2004 US 592225 P**

(43) Date of publication of application:
**30.03.2011 Bulletin 2011/13**

(62) Document number(s) of the earlier application(s) in
accordance with Art. 76 EPC:
**05759207.3 / 1 756 449**

(73) Proprietor: **Schaeffler Technologies AG & Co. KG**
**91074 Herzogenaurach (DE)**

(72) Inventors:
• **Pflug, Rainer**
**91560, Heilsbronn (DE)**
• **Assel, Martin**
**91593, Burgbernheim (DE)**

(56) References cited:
**EP-A1- 0 086 574     WO-A1-03/046413**
**DE-A1- 19 520 508     JP-A- 3 288 047**
**JP-A- 2001 187 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a traction mechanism which is intended for driving at least one camshaft or at least one assembly of an internal combustion engine. The traction mechanism comprises, as a traction device, an endless belt which connects a driven wheel and at least one driving wheel, the traction device being prestressed by a tensioning device. The traction mechanism

- has at least one belt pulley or one toothed belt pulley of the driven wheel or of the driving wheel;
- is arranged in an encased or enclosed installation space, the traction device being exposed at least to an oil mist;
- includes a tensioning device which includes a tension rail which
- is pivotable via an axis of rotation;
- bears nonpositively against the traction device via a means of force;
- has two guide rollers which are spaced apart from one another and at which the traction device is guided.

## Background of the invention

Such a traction mechanism is known from JP 2001 1.87948 A, which discloses the preamble of claim 1.

DE 43 40 865 A1 discloses a tensioning device for a traction mechanism comprising a setting eccentric which is fixed in the operating state. A working eccentric adjustable by means of a torsion spring and surrounding the setting eccentric is connected to a rolling bearing on which a tensioning roller is arranged rotatably. In the installed state, the tensioning roller is supported on a traction device of the traction mechanism and automatically ensures a sufficient prestressing of the traction device. Furthermore, the tensioning device allows independent readjustment, length compensation, due to aging of the traction device.

A traction mechanism, designated as a control drive, of an internal combustion engine is illustrated and described in DE 34 34 428 A1. The control drive is intended for driving a camshaft of the internal combustion engine and includes a toothed belt which rotates in an oil bath. This known traction mechanism provides a spatially narrow relationship between the driving wheels and the driven wheel assigned to the crankshaft of the internal combustion engine. The traction device in this case has no tensioning device.

The patent US 6,000,373 A1 discloses a further control drive for an internal combustion engine, in which the traction device connects a driven wheel assigned to the crankshaft to a driving wheel of the camshaft. Furthermore, this traction mechanism is intended for driving the lubricating oil pump immersed in an oil bath. A toothed belt toothed on both sides serves as a traction device, the internal toothing cooperating with the driven wheel of the crankshaft and the driving wheel of the camshaft and its external toothing cooperating with the toothing of the driving wheel of the oil pump.

## Summary of the invention

In light of the known traction mechanisms for internal combustion engines, the object of the present invention is to design traction mechanisms of this type in such a way that they ensure an increased useful life, in particular, of the traction device.

This set problem is solved by means of the features of claim 1. The traction mechanism according to the invention includes at least one belt pulley of nonround configuration or at least one toothed belt pulley of nonround configuration of the driven wheel or of the driving wheel. This measure damps, prevents or compensates vibrations which are introduced into the traction mechanism owing to the rotational nonuniformity of the internal combustion engine. At the same time, the traction mechanism according to the invention has a positive effect on the generation of noise.

By means of the nonround belt pulley or toothed belt pulley, preferably assigned to the crankshaft of the internal combustion engine, a stabilized traction mechanism with markedly reduced dynamics is obtained, with the result that the force peaks, the peak load and the traction device, advantageously decrease. On account of this, individual components of the traction mechanism, in particular the width of the traction device, can advantageously be simplified, with the result that the weight, installation space and costs of the traction mechanism are reduced.

The reduced prestressing force of the traction device advantageously has a direct influence on the work of friction between the internal toothing of the toothed belt and the external toothing of the belt pulley, that is to say the tooth flanks of the toothed belt and of the belt pulley, during the run-in action and the run-out action. The decreased prestressing force occurring in the case of the vibration-damped traction mechanism decisively reduces the work of friction, this having an advantageous effect on the wear of the traction device. At the same time, the decreased work of friction reduces the risk of tooth jump which, in the control drive of the internal combustion engine, triggers adverse consequential damage and often leads to a complete failure of the internal combustion engine.

According to the invention, the entire traction mechanism is arranged in an encased or closed installation space, the traction device being exposed to an oil mist. What is suitable for this purpose is, for example, a connection, an orifice, between the crankcase of the internal combustion engine and the installation space of the traction mechanism, with the result that an exchange of an oil mist between the crankcase of the internal combustion engine and the installation space of the traction mechanism always takes place.

The installation space intended for the traction mechanism is partially filled with oil, and, in the operating state, the traction device is partially immersed in an oil bath or rotates in an oil bath. In this case, the sealed-off installation space intended for the traction mechanism preferably precedes an internal combustion engine on the end face of the latter.

The nonround belt pulley or toothed belt pulley of the traction mechanism is preferably assigned to the crankshaft of the internal combustion engine. Furthermore, the vibration-damped traction mechanism according to the invention makes it possible to use a cost-optimized tensioning system. What is suitable for this purpose is preferably a tensioning device with only one working eccentric or, alternatively, a tension-rail tensioning device. Furthermore, the traction mechanism according to the invention can, for example, be combined with a friction-disk tensioning device or a cone-type tensioner.

Owing to the combination of the features according to the invention, a cost-optimized traction mechanism can be implemented, along with an increased useful life of the traction device. It is possible, without an exchange of the traction device, to achieve a running capacity, a vehicle travel, of markedly > 200,000 km. The concept according to the invention of the traction mechanism is preferably suitable for diesel internal combustion engines with high specific power, for example for what are known as pump/nozzle internal combustion engines, for which a chain mechanism is ruled out because of insufficient elasticity.

According to a preferred object-compatible solution to the set problem for this invention, a belt pulley or toothed belt pulley which is configured as an ellipse is used. The ellipse is preferably configured such that the largest axis "a" is designed in a ratio of $\geq 1.01{:}1$ with respect to the smallest axis "b". The axis ratio of 1.03:1. determined empirically by tests, furnished, with conventional internal combustion engines used in passenger cars, an optimum result for achieving a vibration-damped traction mechanism. An axis ratio "a":"b" of the ellipse of 1.1:1 is defined as the upper limit.

Alternatively, the invention provides a belt pulley or toothed belt pulley of polygon-like design for the driving wheel or the driven wheel. Moreover, the invention includes designing the nonround belt pulley or toothed belt pulley as a symmetrical or asymmetrical polygon with rounded transitions, for example in the form of a double ellipse.

Regardless of the respective geometric design or configuration, the profile of the belt pulley or toothed belt pulley is determined by means of a calculation in conjunction with a simulation and tests. The result of the vibration-damped traction mechanism according to the invention is that the fluctuation in the prestressing force in the fluctuation of the force peaks of the traction device configured as an endless belt is markedly reduced over the entire rotational speed spectrum in the operating state of the internal combustion engine. At the same time, the risk of adverse resonance is reduced. Proceeding from an average value of the traction device force, fluctuation of the force peaks in the traction device can advantageously be restricted to a value of $\leq 50\%$ by means of the measures according to the invention.

According to the invention, the prestressing force of the traction device is adapted to the dynamics of the vibration-damped traction mechanism. The measures according to the invention make it possible to reduce the prestressing force by $\geq 15\%$, as compared with conventional traction mechanisms, with the boundary conditions being the same, that is to say with the internal combustion engine being the same, and with an identical torque. Advantageously, therefore, the useful life of the traction device and also that of the rolling bearings for the belt pulleys or toothed belt pulleys of all the assemblies connected to the traction mechanism can be increased.

As a result of the vibration-damped traction mechanism according to the invention, the peak load in the traction device decreases. The traction device width "s" can thereby be designed to be narrower by $\geq 18\%$, as compared with conventional traction mechanisms. In addition to a reduced traction device width, the invention makes it possible to adapt the width of all the belt pulleys or toothed belt pulleys of the traction mechanism to the changed traction device width. Both measures advantageously reduce the required overall space of the traction mechanism. Furthermore, due to the traction device of narrower design and to the decreased prestressing force of the traction device applied by the tensioning system, simplified mounting is achieved. Alternatively, a reduced traction device width, an increased useful life on account of the reduced peak load can be achieved by means of a traction device having an unchanged width.

The reduction according to the invention of the belt width of $\geq 18\%$ may be adopted, for example, for a conventional width design, according to the relation:

$$R_{b(\text{belt width})} = F_{h(\text{belt peak load})} / Z_{e(\text{number of meshing teeth})} / R_{i(\text{specific belt coefficient})}$$

Example calculation:

$F_h = 3000$ N; $Z_e = 13.2$;

$R_i = 6$ N/mm $/Z_e$ $R_b = 3000/13.2/6$ $R_b = 37.8$ mm

The required belt width $R_b$ is: 38 mm.

Proceeding from this value, the belt width can be reduced by the value $\geq 18\%$ by means of the measures according to the invention.

A belt or toothed belt of reduced width may advantageously be exchanged for a chain. The traction mechanism according to the invention consequently makes it possible to convert or exchange from a chain mechanism to a belt mechanism which, in particular, also has a weight and cost benefit in addition to an acoustic benefit, for generation of noise. Moreover, a toothed belt mechanism or belt mechanism according to the invention is suitable for overcoming large axial distances, for example between the driven wheel and the driving wheel.

The invention includes, as a tensioning device, a fixed component which is assigned a working eccentric acted upon by a spring means and connected to the tensioning roller. This tensioning device, of simple construction, is adapted to the dynamics of the traction mechanism according to the invention and is consequently adequate for implementing a sufficient prestressing force of the traction device in the operating state.

Alternatively to a simple eccentric tensioning device, according to the invention, the tensioning system used may be a tension rail which is pivotable via a rotary bearing and which, assisted by a means of force, bears nonpositively against the traction device.

As a measure for reducing the friction between the traction device and the tension rail, it is appropriate to provide a tension rail with two guide rollers which are spaced apart from one another and at which the traction device is guided. An alternative measure for optimizing the friction between the tension rail and the traction device is to provide the tension rail with orifices which improve a circulation of the oil or of the oil mist.

For weight optimization, it is appropriate, according to the invention, to configure the tension rail as a plastic injection molding. What is suitable for this purpose is a wear-resistant plastic having high rigidity or strength, for example Kevlar, or a plastic reinforced with glass fibers, such as PA66GF.

This tension rail is preferably assigned a tensioning system which includes a housing in which can be displaced a hydraulically damped piston which is acted upon by a spring means and which cooperates indirectly or directly with the tension rail. Alternatively to this, an electrically activatable means of force cooperating with the tension rail is suitable. Preferably, for this purpose, a ball screw can be used, the servomotor of which cooperates with a regulating or control unit. Such a means of force allows a variable prestressing of the traction device dependent on operating parameters or on definable operating cycles of the internal combustion engine.

According to the invention, a traction device produced from an oil-resistant material is provided for the traction mechanism, for which purpose an elastomeric material mass or a polyurethane is preferably suitable.

The design of the traction device produced as an endless belt makes it possible, on account of the decreased prestressing force, to reduce the number and/or arrangement of the reinforcements produced as pull cords, as compared with previous endless belts. In this case, the pull cords are preferably embedded in an HMBR rubber mixture. Furthermore, on the inside, the endless belt designed as a toothed belt has a polyamide fabric in the region of an inner profiling or inner toothing. Suitable pull cords are, in particular, pull cords made from high-purity glass or from carbon cord. These materials make it possible to reduce the number of pull cords, while at the same time high elasticity or bending strength remains ensured. Moreover, this reinforcement improves the deformation behavior and at the same time reduces intrinsic heating, with the result that a prolonged useful life of the traction device is obtained.

The traction mechanism according to the invention can be used both for the control drive for driving at least one camshaft and for the assembly drive, that is to say for driving individual assemblies, such as the alternator, water pump, steering aid pump or air conditioning compressor of the internal combustion engine.

**Brief description of the drawings**

Exemplary embodiments of the invention are illustrated in the figures in which:

figure 1     shows a traction mechanism according to the invention with a tensioning system comprising a tension rail, in a closed installation space;

figure 2     shows a further traction mechanism according to the invention with a tensioning system including a working eccentric;

figure 3     shows, as a drawing of an individual part, the toothed belt pulley designed to be nonround as an ellipse;

figure 4     shows the construction of a traction device according to the invention;

figure 5      shows a detail of the traction mechanism according to figure 2, which illustrates the tooth meshing between the traction device designed as a toothed belt and a toothed belt pulley;

figure 6      shows a sectional illustration of the tensioning system of the traction mechanism depicted in figure 2.

**Detailed description of the drawings**

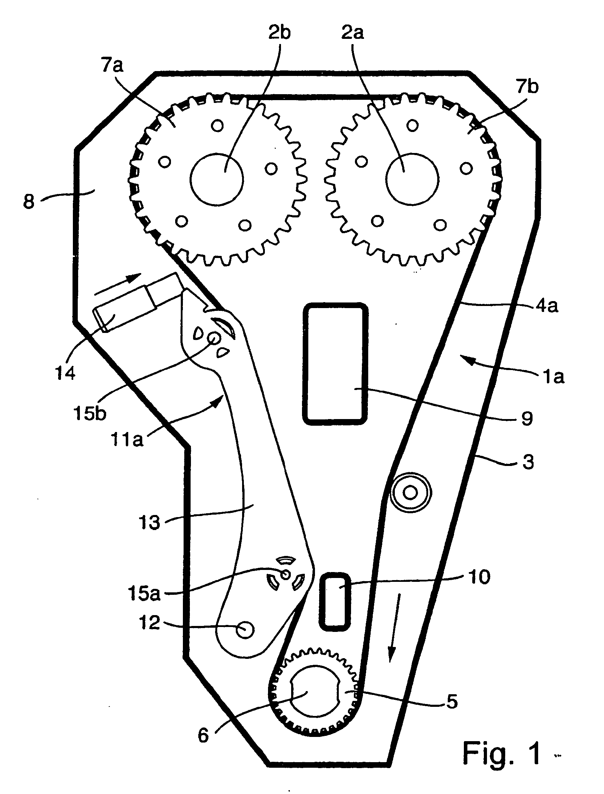

Figure 1 shows a traction mechanism 1a in an installed state, which is provided as a control drive for driving two camshafts of an internal combustion engine 3. A traction device 4a, designed as an endless belt, in this case connects a driven wheel 5 of nonround configuration, that is to say a toothed belt wheel connected directly to a crankshaft 6 of the internal combustion engine 3 and having two driving wheels 7a, 7b assigned to the camshafts 2a, 2b. The traction mechanism 1 a, also to be designated as a control drive, is integrated in a closed installation space 8 preceding the internal combustion engine 3 and the end face of the latter. The installation space 8 is connected by means of orifices 9, 10 to a crank space of the internal combustion engine 3, thus ensuring an overflow of oil mist and/or of lubricating oil which, in particular, has a friction-reducing effect on the traction mechanism 1 a.

Furthermore, the traction mechanism 1 a comprises a tensioning device 11 a which comprises a tension rail 13 pivotable about an axis of rotation 12. At that end of the tension rail 13 which lies opposite the axis of rotation 12 is supported a means of force 14 which imparts to the tension rail 11a a continuous pulse of force acting clockwise, in order to achieve a sufficient prestressing of the traction device 4a. The tensioning device 11a is in this case assigned to the region of an idle side of the traction device 4a rotating clockwise.

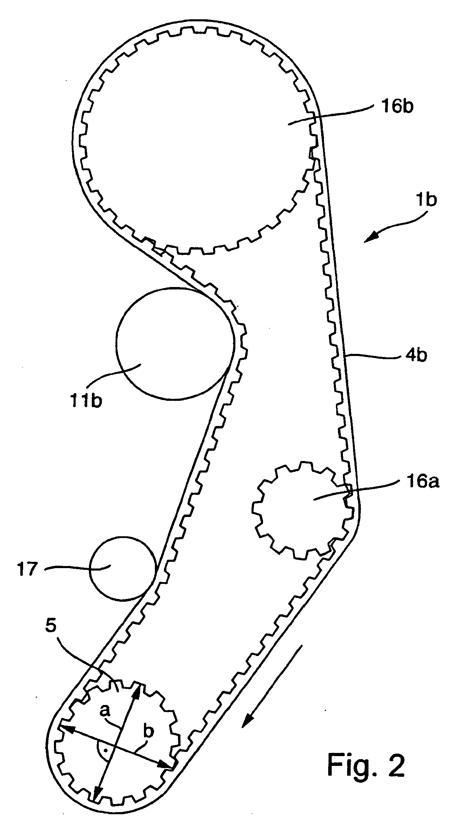

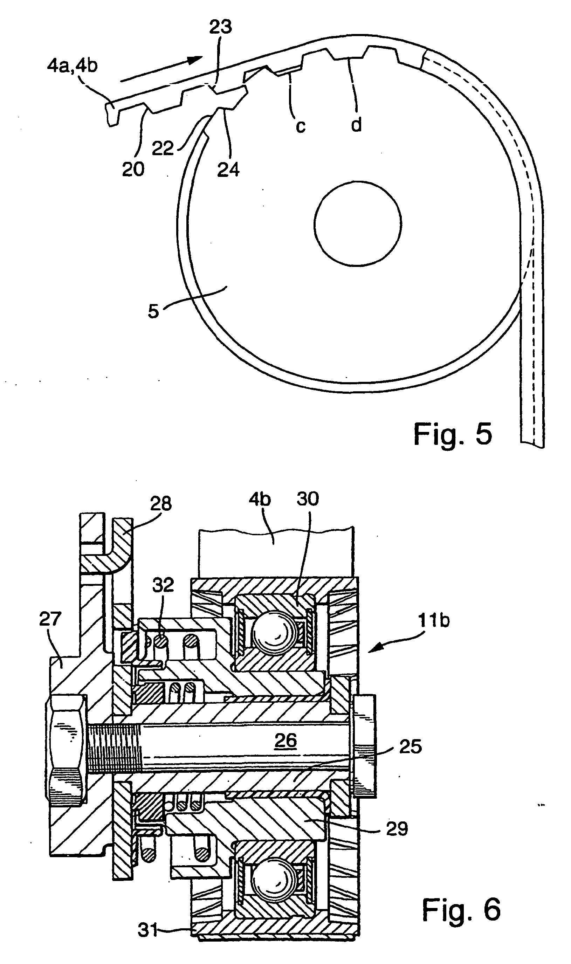

Figure 2 depicts the traction mechanism 1b. in which the driven wheel 5 is designed as an ellipse, with an axis "a", the length of which exceeds the axis "b". The traction mechanism 1 b serves for driving assemblies of the internal combustion engine 3, such as a water pump and air conditioning compressor, the driving wheels 16a, 16b of which are surrounded at least partially by the traction device 4b. The tensioning device 11 b, which includes a working eccentric, is supported on the idle side of the traction mechanism 1b rotating clockwise. Figure 6 illustrates the construction of the tensioning device 11 b. The traction device 4b is guided at a deflecting roller 17 between the tensioning device 11 a and the driven wheel 5.

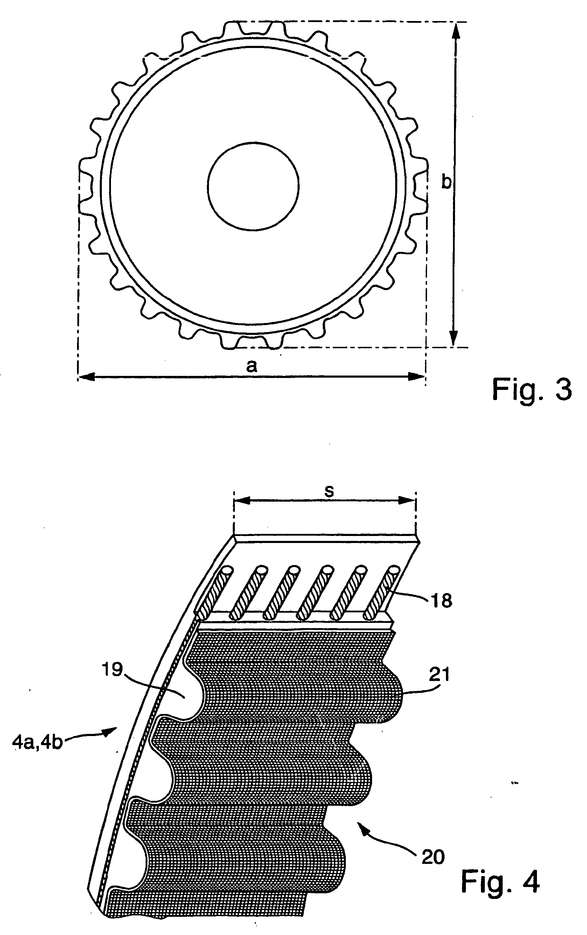

Figure 3 illustrates on an enlarged scale the driven wheel 5 which forms an ellipse. The outside diameter or longitudinal axis "a" in this case exceeds the dimension of the further longitudinal axis "b". This deliberate configuration of the driven wheel 5 determined by means of tests gives rise to a vibration-damped traction mechanism 1a, 1b, this having an advantageous effect on the design of further components of the traction mechanism 1a, 1b.

The construction of the traction device 1a, 1b according to the invention is shown in figure 4. Owing to the driven wheel 5 of nonround configuration and to the associated prestressing force of the traction device 4a, 4b, the width "s" of the traction device 4a, 4b can be reduced. Correspondingly to the width "s" of the traction device 4a, 4b, the traction mechanisms 1a, 1b comprise width-adapted toothed belt pulleys or belt pulleys. The construction of the traction device 4a, 4b provides continuous pull cords 18 which are arranged parallel and are embedded in an HNBR rubber mixture 19. An internal toothing 20 of the traction device 4a, 4b has a polyamide fabric 21. In order to increase the tearing strength of the traction device 4a, 4b or to optimize further the width "s" of the traction device 4a, 4b there is a possibility of using pull cords 18 produced from high-purity glass or carbon cord.

An interaction, a run-in, of the traction device 4a, 4b with the driven wheel 5 of nonround configuration is illustrated in figure 5. Owing to the advantageous reduced prestressing force according to the invention of the traction device 4a, 4b, a work friction between the internal toothing 20 of the traction device 4a, 4b and an external toothing 22 of the driven wheel 5 decreases at the same time. The work friction arises during a sliding movement of a tooth flank 23 of the internal toothing with respect to the tooth flank 24 of the external toothing, between a first contact phase, which corresponds to the position "c", and the reaching of an end position in a position "d". Due to the reduced work friction in the contact zone between the traction device 4a, 4b and the driven wheel 5, designed as a toothed belt pulley, on account of the decreased prestressing force of the traction device 4a, 4b, a frictional heat decreases at the same time because of a reduced deformation of the traction device 4a, 4b. This results, overall, in a markedly prolonged useful life of the traction mechanism 1a, 1 b.

The tensioning device 11b according to figure 2 is depicted in longitudinal section in figure 6. The tensioning device 11b, also to be designated as a simple eccentric, comprises a cylindrically designed carrying body 25 which is fastened fixedly, for example to a housing 27 of the internal combustion engine 3, by means of a screw connection 26. The carrying body 26 is inserted positively into a baseplate 28 which is supported on the housing 27 and is fixed in terms of rotation on the latter. Arranged rotatably on the carrying body 25 is a working eccentric 29 on which is positioned a rolling bearing 30 which is surrounded on the outside by a tensioning roller 31. In the installation state of the tensioning device 11 b, a spring means 32 inserted between the baseplate 28 and the working eccentric 29 gives rise to a nonpositive bearing contact of the tensioning roller 31 against the traction device 4b.

**Reference numerals**

| | |
|---|---|
| 1a | Traction mechanism |
| 1b | Traction mechanism |
| 2a | Camshaft |
| 2b | Camshaft |
| 3 | Internal combustion engine |
| 4a | Traction device |
| 4b | Traction device |
| 5 | Driven wheel |
| 6 | Crankshaft |
| 7a | Driving wheel |
| 7b | Driving wheel |
| 8 | Installation space |
| 9 | Orifice |
| 10 | Orifice |
| 11a | Tensioning device |
| 11b | Tensioning device |
| 12 | Axis of rotation |
| 13 | Tension rail |
| 14 | Means of force |
| 15a | Guide roller |
| 15b | Guide roller |
| 16a | Driving wheel |
| 16b | Driving wheel |
| 17 | Deflecting roller |
| 18 | Pull cord |
| 19 | Rubber mixture |
| 20 | Internal toothing |
| 21 | Polyamide fabric |
| 22 | External toothing |
| 23 | Tooth flank |
| 24 | Tooth flank |
| 25 | Carrying body |
| 26 | Screw connection |
| 27 | Housing |
| 28 | Baseplate |
| 29 | Working eccentric |
| 30 | Rolling bearing |
| 31 | Tensioning roller |
| 32 | Spring means |

**Claims**

1. A traction mechanism, which is intended for driving at least one camshaft or at least one assembly of an internal combustion engine (3), comprising a traction device (4a) which is designed as an endless belt and connects a driven wheel (5) and at least one driving wheel (7a, 7b) and which is prestressed by a tensioning device (11 a), wherein the traction mechanism (1a)

   - has at least one belt pulley or one toothed belt pulley of the driven wheel (5) or of the driving wheel (7a, 7b);
   - is arranged in an encased or enclosed installation space (8), the traction device (4a) being exposed at least to an oil mist;
   - includes a tensioning device (11a) which includes a tension rail (13) which
   - is pivotable via an axis of rotation (12);
   - bears nonpositively against the traction device (4a) via a means of force (14);

- has two guide rollers (15a, 15b) which are spaced apart from one another and at which the traction device (4a) is guided;

**characterized in that** the belt pulley or the toothed belt pulley is of nonround configuration and that the installation space (8) intended for the traction mechanism (1a) being partially filled with oil, and, in the operating state, the traction device (4a) being partially immersed in an oil bath or rotating in an oil bath.

2. The traction mechanism as claimed in claim 1, for which a sealed-off installation space (8) preceding the internal combustion engine (3) on the end face of the latter is intended.

3. The traction mechanism as claimed in claim 1, which is provided for driving assemblies of the internal combustion engine, such as the alternator, water pump, steering aid pump or air conditioning compressor, or which is intended for driving an oil pump or balancing shafts of the internal combustion engine.

**Patentansprüche**

1. Zugmitteltrieb, der zum Antrieb mindestens einer Nockenwelle oder mindestens eines Aggregats einer Brennkraftmaschine (3) bestimmt ist, umfassend ein als Endlosriemen ausgebildetes Zugmittel (4a), das ein Abtriebsrad (5) und mindestens ein Antriebsrad (7a, 7b) verbindet und das von einer Spannvorrichtung (11a) vorgespannt ist, wobei der Zugmitteltrieb (1a):

   - mindestens eine Riemenscheibe oder eine Zahnriemenscheibe des Abtriebsrades (5) oder des Antriebsrades (7a, 7b) aufweist;
   - in einem gekapselten bzw. geschlossenen Einbauraum (8) angeordnet ist, wobei das Zugmittel (4a) mindestens einem Ölnebel ausgesetzt ist;
   - eine Spannvorrichtung (11a) enthält, die eine Spannschiene (13) enthält, die
   - über eine Drehachse (12) schwenkbar ist;
   - über ein Kraftmittel (14) kraftschlüssig an dem Zugmittel (4a) anliegt;
   - zwei voneinander beabstandete Führungsrollen (15a, 15b) aufweist, an denen das Zugmittel (4a) geführt wird;

   **dadurch gekennzeichnet, dass** die Riemenscheibe oder die Zahnriemenscheibe unrund gestaltet sind und dass der für den Zugmitteltrieb (1a) bestimmte Einbauraum (8) teilweise mit Öl gefüllt ist und das Zugmittel (4a) im Betriebszustand teilweise in ein Ölbad eintaucht bzw. in einem Ölbad umläuft.

2. Zugmitteltrieb nach Anspruch 1, für den ein der Brennkraftmaschine (3) stirnseitig vorgelagerter, abgedichteter Einbauraum (8) bestimmt ist.

3. Zugmitteltrieb nach Anspruch 1, der zum Antrieb von Aggregaten der Brennkraftmaschine, wie Generator, Wasserpumpe, Lenkhilfspumpe oder Klimakompressor, vorgesehen ist oder der zum Antrieb einer Ölpumpe oder von Ausgleichwellen der Brennkraftmaschine bestimmt ist.

**Revendications**

1. Mécanisme de traction qui est destiné à entraîner au moins un arbre à cames ou au moins un ensemble d'un moteur à combustion interne (3), comprenant un dispositif de traction (4a) qui est conçu sous forme de courroie sans fin et relie une roue entraînée (5) et au moins une roue d'entraînement (7a, 7b) et qui est précontraint par un dispositif tendeur (11a), le mécanisme de traction (1a)

   - ayant au moins une poulie à courroie ou une poulie à courroie dentée de la roue entraînée (5) ou de la roue d'entraînement (7a, 7b)
   - étant agencé dans un espace d'installation (8) enfermé ou enserré, le dispositif de traction (4a) étant exposé au moins à un brouillard d'huile ;
   - comportant un dispositif tendeur (11a) qui comporte un rail tendeur (13) qui
   - peut pivoter par l'intermédiaire d'un axe de rotation (12) ;
   - presse de manière non positive contre le dispositif de traction (4a) par l'intermédiaire d'un moyen de force (14) ;
   - a deux rouleaux de guidage (15a, 15b) qui sont espacés l'un de l'autre et au niveau desquels le dispositif de traction (4a) est guidé ;

**caractérisé en ce que** la poulie à courroie ou la poulie à courroie dentée a une configuration non ronde et **en ce que** l'espace d'installation (8) prévu pour le mécanisme de traction (1a) est partiellement rempli d'huile et, dans l'état de fonctionnement, le dispositif de traction (4a) est partiellement immergé dans un bain d'huile ou tourne dans un bain d'huile.

2. Mécanisme de traction selon la revendication 1, pour lequel un espace d'installation (8) fermé hermétiquement précédant le moteur à combustion interne (3) sur la face d'extrémité de ce dernier est prévu.

3. Mécanisme de traction selon la revendication 1, qui est prévu pour entraîner des ensembles du moteur à combustion interne, tels que l'alternateur, la pompe à eau, la pompe d'assistance à la direction ou le compresseur de climatisation, ou qui est destiné à entraîner une pompe à huile ou à équilibrer des arbres du moteur à combustion interne.

Fig. 1

Fig. 2

EP 2 302 260 B1

Fig. 3

Fig. 4

11

Fig. 5

Fig. 6

**EP 2 302 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001187948 A
- DE 4340865 A1
- DE 3434428 A1
- US 6000373 A1